# EUROPÄISCHE PATENTSCHRIFT

(11) **EP 1 610 984 B1**
(45) Veröffentlichungstag und Bekanntmachung des Hinweises auf die Patenterteilung: **14.03.2007**
(21) Anmeldenummer: 03795931.9
(22) Anmeldetag: 18.12.2003
(51) Int. Cl.: B60R 21/20, B60R 21/16

(54) **SICHERHEITSEINCHTUNG IN EINER SEITENVERKLEIDUNG EINES FAHRZEUGS**
SAFETY DEVICE IN THE SIDE LINING OF A VEHICLE
DISPOSITIF DE SECURITE SITUE DANS UN HABILLAGE LATERAL DE VEHICULE

(30) Priorität: 04.04.2003 DE 10315622
(43) Veröffentlichungstag der Anmeldung: 04.01.2006
(73) Patentinhaber: PEGUFORM GMBH, 79268 Bötzingen (DE)
(72) Erfinder: GRÜNER, Engelbert, 92339 Beilngries (DE); BÜHLER, Hartmut, 79106 Freiburg (DE); FORSTHOFER, Konrad, 93352 Laaberberg (DE)
(74) Vertreter: Patentanwälte Westphal, Mussgnug & Partner
(86) Internationale Anmeldenummer: PCT/EP2003/014575
(87) Internationale Veröffentlichungsnummer: WO 2004/087473

(56) Entgegenhaltungen:
- EP-A- 0 639 481
- EP-A- 0 771 699
- WO-A-02/098714
- FR-A- 2 792 271
- US-A- 5 806 880
- US-A- 5 921 576
- US-B1- 6 224 087
- PATENT ABSTRACTS OF JAPAN vol. 018, no. 602 (M-1705), 16. November 1994 (1994-11-16) -& JP 06 227350 A (TOYOTA MOTOR CORP), 16. August 1994 (1994-08-16)
- ANONYMOUS: "Deployable door trim panel" RESEARCH DISCLOSURE, KENNETH MASON PUBLICATIONS, HAMPSHIRE, GB, Bd. 458, Nr. 101, Juni 2002 (2002-06), XP007130632 ISSN: 0374-4353

## Beschreibung

Die Erfindung betrifft ein Einbauteil für Kraftfahrzeuge, insbesondere für eine Seitenverkleidung, welche mit einer Sicherheitseinrichtung zur Vermeidung von Insassenverletzungen bei einem Aufprall ausgerüstet ist. Dieses Einbauteil besteht aus einem unsichtbar hinter der Innenverkleidung angebrachten Gassack und seiner Gassackabdeckung. Die Gassackabdeckung ist Teil eines als Schusskanal fungierenden Austrittsbereichs. Bei Entfaltung eines Gassackes öffnet sich die Gassackabdeckung entlang mindestens eines Verschwächungsbereichs. Die Gassackabdeckung wird von einem austretenden Gassack erfasst und um den Verschwächungsbereich in einer Drehbewegung weggeschleudert, um den Austrittsweg für den Gassack freizugeben. Die Gassackabdeckung kann dabei der schlagartigen Drehbewegung als Gesamtheit ausgesetzt sein oder durch die Anordnung von zusätzlichen Verschwächungslinien aus mehreren Teilbereichen bestehen, welche bei der Entfaltung des Gassacks den Austrittsweg freigeben. In jedem der Fälle muss sichergestellt sein, dass nach Entfaltung des Gassacks die Gassackabdeckung oder die Teilbereiche der Gassackabdeckung mit der Innenraumverkleidung verbunden bleiben. Durch diese Maßnahme kann vermieden werden, dass Teile der Gassackabdeckung oder angrenzender Teile der Innenraumverkleidung bei Auslösung eines Gassacks in den Fahrzeuginnenraum geschleudert werden und in der Folge ein Sicherheitsrisiko für die Insassen bedeuten, weil es durch die in den Innenraum geschleuderten Partikel oder Teile der Gassackabdeckung zu Verletzungen der Fahrzeuginsassen kommen kann.
Neben der Erfüllung dieser sicherheitsrelevanten Aspekte muss bei der Auslegung einer Innenraumverkleidung mit einer derartigen Sicherheitseinrichtung sichergestellt werden, dass eine Auslösung des Gassacks aus Versehen ausgeschlossen werden kann. Dieser Forderung wird bei der Auslegung der Gassackabdeckung mittels einer Verstärkung des Bereiches der Gassackabdeckung oder mittels mindestens eines zusätzlichen Lagerpunktes der Gassackabdeckung auf dem Träger Rechnung getragen. Eine weitere Anforderung an derartige Innenraumverkleidungen in Fahrzeugen besteht darin, den optischen Eindruck des Fahreuginnenraums auf den Insassen durch den Einbau mindestens einer Sicherheitsvorrichtung nicht zu beeinträchtigen. Insbesondere handelt es sich um eine Abdeckung mit mindestens einem Verschwächungsbereich für einen Gassack, die auf der Sichtseite mit freiem Auge nicht als solche erkennbar ist. Bei Türseitenverkleidungen werden dazu meist Stoffspiegel, Armauflagen oder Polsterungen so gestaltet, dass sie von der nicht sichtbaren Seite aus betrachtet, die Funktion eine Klappe annehmen können.

Eine derartige Lösung wird in DE19709169A1 beschrieben. Das dargestellte Sicherheitssystem für den Seitenaufprall aktiviert eine Stütze, das heißt, eine obere Abdeckung einer Türseitenverkleidung durch die kinetische Energie des Airbags. Gleichzeitig wird die Polsterung wie eine Klappe um einen unteren Angelpunkt in Richtung Insassen gedreht, um den Weg für den sich entfaltenden Airbag freizugeben. Die Stütze oder obere Abdeckung bleibt während des gesamten Auslösevorgangs mit dem sich entfaltenden Airbag verbunden und soll eine Stütze für den Kopf oder Oberkörper eines Insassen darstellen. Da es sich bei der oberen Abdeckung aber ein Kunststoffbauteil handelt, welches bei der explosionsartigen Entfaltung des Airbags eigentlich eine Gefahr für den Insassen bedeutet, weil jeglicher Partikelflug bei Airbagsystemen aus Sicherheitsgründen absolut ausgeschlossen werden muss, ist die Lösung in der vorliegenden Form im Fahrzeugbau nicht einsetzbar.
Ein häufig beschrittener Lösungsweg ist der Einsatz von gezielt in der Fahrzeuginnenraumverkleidung vorhandenen Verschwächungsbereichen.
Aus dem Stand der Technik sind sowohl Ausführungen von Verschwächungsbereichen bekannt, die auf der Sichtseite einer Fahrzeuginnenraumverkleidung sichtbar sind, also eine klar definierte Kontur besitzen als auch solche Ausführungen, in denen die Verschwächungsbereiche für das freie Auge nicht auf der Oberfläche erkennbar sind. Diese Abdeckungen müssen daher auf der unsichtbaren Seite entlang einer Sollbruchlinie geschwächt werden.
So wird in Dokument US6131945A das Problem angesprochen, dass es bei der Auslösung des Gassacks nicht zu definiertem und reproduzierbaren Auslöseverhalten kommt, welches aber aus Sicherheitsgründen von den Fahrzeugherstellem gefordert wird. Die in US6131945A beschriebene Lösung dieses Problems erfordert den Einsatz eines Metalleinlegers, welcher unter dem Druck des sich auslösenden Gassacks die Öffnungskräfte in die Abdeckung einleitet und die Klappe so gezielt öffnet, dass es weder an der Abdeckung noch in dem angrenzenden Bereich zu Bruchstücken oder Partikelflug kommen kann. Dieser Metalleinleger ist nicht direkt mit dem Kunststoffträger verbunden, sondern von der Gassackabdeckung getrennt und mit einem eigenen Verbindungsglied auf dem Schusskanal oder einem Fahrzeugquerträger montiert. Der Kunststoffträger ist im Bereich der Abdeckung mit einer Schicht aus PVC - beschichtetem Nylon ausgestattet, welche mittels Nieten mit dem Kunststoffträger verbunden ist. Diese Nieten werden durch Erwärmung der PVC-Nylonschicht und des Kunststoffträgers in einem zusätzlichen Verarbeitungsschritt eingebracht. Einfachere Ausführungsformen, wie sie in US6131945A und US5941558A dargestellt werden, sind nur bei sichtbaren Sollbruchlinien realisierbar.
Die dargestellte Konstruktion löst zwar das Problem des Partikelfluges oder von Schichtablösungen zufriedenstellend, erfordert aber eine Vielzahl von Prozessschritten, umfassend die Einlage einer Dekorschicht in eine Form, Hinterschäumen der Dekorschicht und einer Trägerschicht, Positionierung einer PVC-Nylonschicht und eventuell vorläufige Verklebung derselben mit der Schaumschicht, Aufheizen und Anbringen der Niete auf die PVC-Nylonschicht und die Trägerschicht, Formen und Zuschneiden eines Metalleinlegers, Vorformen des Metalleinlegers, Positionieren des Metalleinlegers und der PVC-Nylonschicht und Verbindung der so positionierten Schichten mit einem Fahrzeugquerträger oder dem Gassackschusskanal durch eine Nietverbindung oder eine Schraubverbindung. Einerseits verteuert sich die Herstellung des Bauteils nicht unwesentlich durch Einführung jedes zusätzlichen Prozessschritts, andererseits sind zudem mindestens 3 verschiedene Materialien erforderlich, nämlich ein Verbund aus Kunststoffen für die Dekorschicht, die Schaumschicht und die Trägerschicht, eine Schicht aus PVC-Nylon und ein Metalleinleger, was im Fall der Entsorgung größeren Aufwand im Fall einer Trennung zur anschließenden Wiederverwertung aller dieser Materialien bedeutet. Zudem ist die angegebene Ausführung nicht auf Verkleidungen anwendbar, bei welchen der Gassack in einer Lage positioniert ist, die nicht parallel zu der Verkleidungsoberfläche verläuft.
Wenn nämlich die Einbaustellung des Gassacks nicht im wesentlichen parallel zu der inneren (im eingebauten Zustand unsichtbaren) Innenverkleidungsoberfläche ist, kommt es zu einer asymmetrischen Lastverteilung bei der Entfaltung des Gassacks.
Dadurch besteht die Gefahr, dass die Entfaltung nicht vollständig erfolgt oder nicht in den optimalen Schutz für den Passagier gewährleistet.

In der EP 0771 699 B1 wird eine Gassack-Seitenaufprall-Schutzeinrichtung für Fahrzeuginsassen beschrieben, die in einer Fahrzeugtür integriert ist und eine Druckgasquelle sowie einen durch diese aufblasbaren Kopfschutfgassack aufweist. Die EP 0 771 699 B1 sieht außer der Anordnung von Sollbruchstellen keine Maßnahmen vor, den Gassack beim Entfalten zu kontrollieren und das Auftreten von Splittern der Gassackabdeckung zu verhindern.

Es ist daher Aufgabe der Erfindung, eine Sicherheitsvorrichtung zu schaffen, welche den Fahrzeuginsassen im Fall eines Seitenaufpralls Schutz für den Kopfbereich bietet,
Die Sicherheitsvorrichtung funktioniert unabhängig davon, ob die Seitenscheiben offen oder geschlossen sind, da sich der entfaltende Gassack nicht an der Scheibe abstützt oder die Scheibe als Führungsebene für den sich entfaltenden Gassack dient.

Eine weitere Aufgabe der Erfindung ist die Gewährleistung einer sicheren Krafteinleitung in den Bereich der Verschwächung oder der Verschwächungen, was durch einen festen Verbund von Kunststoffträgerschicht und einer optionalen Verstärkungsschicht aus Kunststoff, zustande kommt.

Es ist eine weitere Aufgabe der Erfindung, einen unsichtbaren Verschwächungsbereich herzustellen, entlang dessen die Innenverkleidung so aufreißt, dass es bei keiner der Schichten, aus denen die Fahrzeuginnenverkleidung besteht, zu Ablösungen mindestens einer der Schichten kommt. Der Riss soll in allen Schichten der Fahrzeuginnenverkleidung möglichst genau den Konturen der Verschwächung folgen. Dieses Ziel wird dadurch erreicht, dass durch den Kunststoffverbund eine definierte Krafteinleitung in den Kantenbereich oder in anders gestaltete Verschwächungsbereiche erfolgt. Der Kunststoffverbund ist dabei vorzugsweise so angeordnet, dass er der Geometrie der Abdeckung entspricht.

Durch die Ausführung der Kante des Kunststoffverbundes, die mehrere Umlenkungen vorsieht, welche einen Verschwächungsbereich ausbilden können, wird bei Auslösung des Gassacks ein genau definierter Druck auf jeden Teil der Umlenkung ausgeübt. Das Vorhandensein lokaler Druckspitzen startet den Anriss an den Stellen der Umlenkung, die dem höchsten Druck ausgesetzt sind.

Die Verwendung von unsichtbaren Verschwächungsbereichen erhöht die Freiheitsgrade für die Auswahl des Interieurdesigns. Mit der in der Erfindung vorgestellten Geometrie der Verschwächungsbereiche, ist es einerseits möglich, unabhängig vom Schichtaufbau einen genau definierten Anriss und einen genau reproduzierbaren Rissfortschritt zu erreichen und andererseits kann man auf einen Teil der Verschwächungs- oder Perforationspunkte zumindest über einen Teil der Verschwächungsbereichs verzichten.

Ablösungen der Dekorschicht treten bei dem Verfahren nach der Lehre dieser Erfindung nicht auf, weil die Verschwächung außerhalb der Dekorschicht angeordnet sein kann. Somit kann verhindert werden, dass während der Auslösung eines Gassacks Partikel ins Fahrzeuginnere gelangen und durch die explosionsartige Beschleunigung zur Gefährdung der Fahrzeuginsassen führen können.
Der Bereich der Türseitenverkleidung, welcher den Gassack aufnimmt, weist im Schnitt einen annähernd horizontalen Bereich, einen stark gekrümmten Bereich und einen im wesentlichen vertikalen Bereich auf. Die Türseitenverkleidung besteht dabei mindestens aus einer Kernschicht, der schon genannten Trägerschicht, und weist optionale Schaum- und/oder Dekorschichten auf. Alle Schichten haften untereinander und zeigen somit ein ähnliches Schnittbild mit Schichtquerschnitten, welche voneinander abweichen können.
Die Kernschicht besteht beispielsweise aus Polypropylen, kann aber Verstärkungsschichten enthalten oder mit Verstärkungsschichten verbunden sein,
In einer weiteren Ausgestaltung der Erfindung besteht die Kernschicht oder Kunststoffträgerschicht aus expandiertem Polypropylen. Die Verwendung eines geschäumten Trägermaterials ersetzt die Schaumschichten, vereinfacht somit den Verarbeitungsprozess, erfüllt die Forderungen nach Leichtbauweise, bietet die Möglichkeit, je nach Schaumdichte verschiedenste haptische Effekte zu erzeugen und ermöglicht letztendlich auch eine recyclinggerechte Materialauswahl, da die Innenraumverkleidung fast ausschließlich aus Polypropylen hergestellt werden kann und somit ein Monomaterialkonzept realisiert werden kann.
Je nach der Materialauswahl der Kunststoffträgerschicht bieten sich folgende Alternativen: die Verstärkungsschicht wird in die Kunststoffträgerschicht eingebettet oder mit der Kunststoffträgerschicht verschweißt, verklebt oder verpresst. Alternativ dazu oder zusätzlich kann eine formschlüssige Verbindung vorgesehen werden. Denkbar sind Rastmechanismen auf der Kunststoffträgerschicht, die in entsprechende Halterungen an der Verstärkung eingreifen.
Da die Verstärkungsschicht den Kräften des sich entfaltenden Gassacks standhalten muss, enthält sie zumindest teilweise ein reißfestes Material, welches als Gewebe, Metalleinleger, Gewirke, Gitter, Geflecht oder Gelege aus einem faserverstärkten Polypropylen oder Kunststoffmaterial mit vergleichbaren Eigenschaften ausgeführt sein kann.
Der nötige innige Verbund mit der Verstärkungsschicht wird durch durch Verkleben, Verpressen oder Verschweißen oder Kombinationen dieser Verfahren erreicht.
Das reißfeste Material übernimmt gleichzeitig die Wirkung eines Scharniers, daher ist es zumindest an einem Ende mit der Kunststoffträgerschicht verbunden. Dieser Verbund muss den Zugkräften standhalten, welche durch die Explosion des sich entfaltenden Gassacks auf den gesamten Bereich wirken, welcher als Abdeckung des Luftsacks fungiert. In einer vorteilhaften Ausgestaltung ist das reißfeste Material um ein Befestigungselement gewickelt, welches mit der Kunststoffträgerschicht verbunden ist, wobei die Verbindung durch Vernieten, Verschrauben oder unter Einwirkung von Wärme oder unter Einsatz von Klebe- oder Bindemitteln erfolgt.

Unter Wärmeinfluss schmilzt das Kunststoffträgermaterial an und es erfolgt eine zumindest teilweise Verschweißung des reißfesten Materials mit dem Kunststoffträgermaterial.
In einem anderen Ausführungsbeispiel wird eine so große Fläche des Innenbereichs der Kunststoffträgerschicht mit dem reißfesten Material belegt und durch eine der oben genannten Verbindungstechniken verbunden, dass allein die Haltekräfte, welche aus der Verbindung von Kunststoffträgerschicht mit der Verstärkungsschicht aus reißfestem Material resultieren, ein Versagen der Klappe ausschließlich entlang der dafür vorgesehenen Versagenslinien gewährleisten.
Um die Aufgabe zu erfüllen, einen definierten Anriss und Rissfortschritt zu gewährleisten, folgt die Verschwächung im wesentlichen dem Umriss der Begrenzung der Verstärkungsschicht.

Sicherheitsvorrichtungen im Fahrzeug sollen nicht nur Frontalzusammenstöße so weit dämpfen oder kompensieren, dass größere Verletzungen der Passagiere ausgeschlossen werden können, sondern auch bei einem Seitenaufprall einen vergleichbaren Schutz bieten.
Zu der Lösung dieses Problems wurden Sicherheitseinrichtungen geschaffen, welche einen oder mehrere Gassäcke aus dem Dachbereich eines Fahrzeugs entfalten.

So beschreibt die Gattungsbildende US 6 224 987 B1 eine Sicherheitseinrichtung für den Schutz von Kraftfahrzeuginsassen vor Seitenaufprall, wobei eine Gassackeinrichtung unsichtbar im Dachbereich des Kraftfahrzeugs angeordnet ist. Wenn allerdings dieser Dachbereich fehlt, wie bei halboffenen Fahrzeugen vom Typ Cabriolet, muss dem Sicherheitsbedürfnis dennoch Rechnung getragen werden. Somit besteht eine Aufgabe der Erfindung darin, eine Vorrichtung für den Schutz von Kraftfahrzeugeinsassen vor Seitenaufprall anzubieten, bei der das Gassackmodul außerhalb des Dachbereiches angeordnet ist.

Gelöst wird diese Aufgabe durch eine Sicherheitseinrichtung mit den Merkmalen des Anspruchs 1.

Das Öffnungsverhalten eines derartigen Gassacks erfolgt spiegelgleich zu den bekannten vorhangartigen Gassäcken. Durch die Verwendung eines zwischen Türinnenblech und Türseitenverkleidung angeordneten Airbagmoduls, welcher unter mindestens einer Verschwächungsstruktur in einem oberen Bereich der Türseiteriverkleidung angeordnet ist und aufgrund eines den Airbag auslösenden Seitenaufpralls ein Versagen der Türseitenverkleidung entlang dieser Verschwächungsstruktur und einen Austritt des Airbags in den Fahrzeuginnenraum zur Folge hat. Der Airbag nimmt dabei eine Position zwischen der Seitenscheibe und dem Kopf des Passagiers ein. Die Seitenscheibe ist für die Führung des sich entfaltenden Airbags nicht erforderlich. Der Airbag selbst kann eine Serie von Nähten aufweisen, welche die Auslöserichtung nachträglich beeinflussen.
Fig. 1 ist ein Schnitt durch eine Gassackabdeckung in einer ersten Ausführungsform
Fig. 2 ist ein Schnitt durch eine Gassackabdeckung in einer ersten Ausführungsform bei teilweise ausgelöstem Gassack
Fig. 3 ist ein Schnitt durch eine Gassackabdeckung in einer ersten Ausführungsform bei vollständig ausgelöstem Gassack
Fig. 4a ist eine perspektivische Sicht der Gassackabdeckung nach einer nicht erfindungsgemäßen Ausführungsform
Fig. 4b ist eine perspektivische Sicht der Gassackabdeckung nach der ersten Ausführungsform bei teilweiser Auslösung des Gassacks
Fig. 5 ist ein Schnitt durch eine Gassackabdeckung in einer zweiten Ausführungsform
Fig. 6 ist ein Schnitt durch eine Gassackabdeckung in einer zweiten Ausführungsform bei teilweise ausgelöstem Gassack
Fig. 7 ist ein Schnitt durch eine Gassackabdeckung in einer zweiten Ausführungsform bei ausgelöstem Gassack
Fig. 8 ist ein Schnitt durch eine Gassackabdeckung in einer dritten Ausführungsform
Fig. 9 ist ein Schnitt durch eine Gassackabdeckung in einer dritten Ausführungsform bei teilweise ausgelöstem Gassack
Fig. 10 ist ein Schnitt durch eine Gassackabdeckung in einer dritten Ausführungsform bei ausgelöstem Gassack
Fig. 11a ist eine perspektivische Sicht der Gassackabdeckung nach der zweiten Ausführungsform
Fig. 11b ist eine perspektivische Sicht der Gassackabdeckung nach der ersten Ausführungsform bei teilweiser Auslösung des Gassacks
Fig. 12 ist ein Schnitt durch eine Gassackabdeckung in einer vierten Ausführungsform.

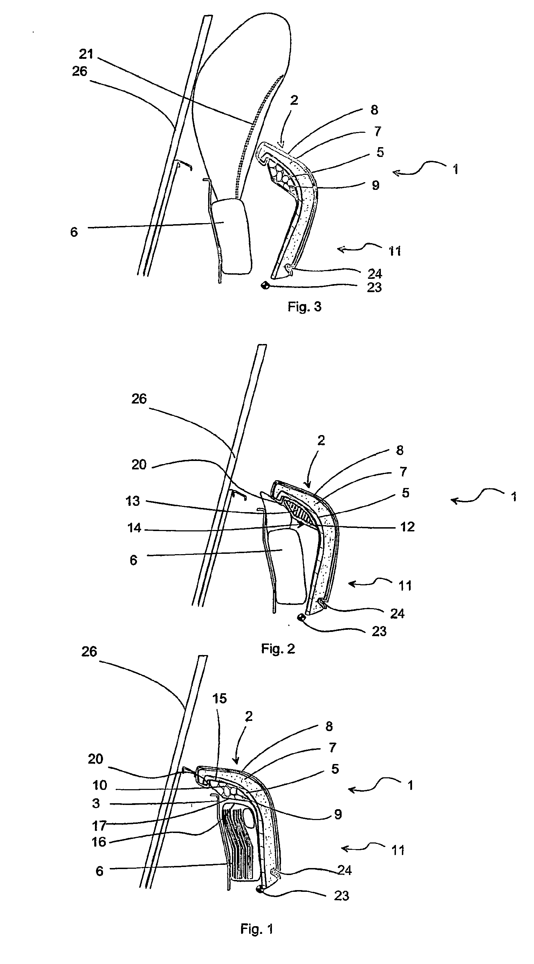

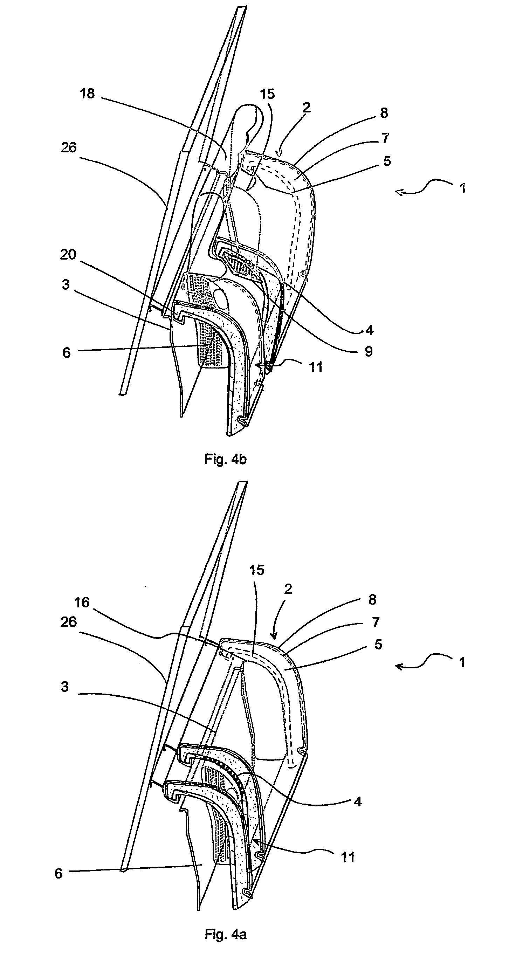

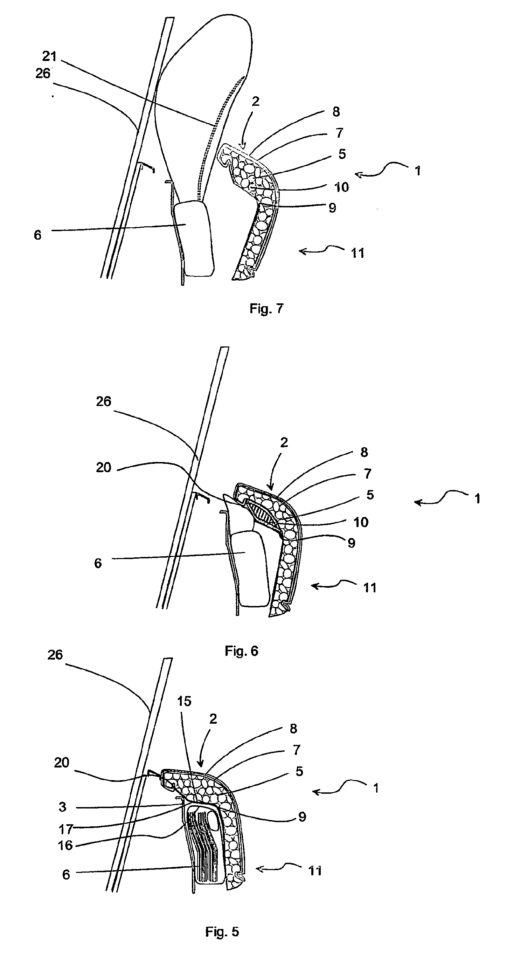

Fig. 1 ist ein Schnitt durch eine Innenraumverkleidung mit einer Gassackabdeckung in einer ersten Ausführungsform. Die Innenraumverkleidung 1 besteht aus einem Bereich, welcher als Abdeckung 2 für einen Gassack dient und mindestens einem weiteren Bereich 11, dem die Funktion der Abgrenzung des Fahrzeuginnenraums gegenüber der Träger- oder Rahmenkonstruktion des Fahrzeugs zukommt. Diese Innenraumverkleidung besteht in einer bevorzugten Ausführungsart zumindest aus einer Dekorschicht 8 und einer Kunststoffträgerschicht 5. Diese Kunststoffträgerschicht selbst kann als Schaumschicht ausgebildet sein, wenn dem Wunsch nach Gewichtsreduktion Rechnung getragen werden soll. Eine derartige Schaumschicht 7 besteht bevorzugt aus expandiertem Polypropylen, welches ausreichende Festigkeit aufweist, um als Trägermaterial zu dienen, wie in Fig. 5,6,7 gezeigt wird.
In der in Fig. 1 dargestellten Variante besteht die Dekorschicht 8 aus einer Folie oder Formhaut, die hinterschäumt wird, beispielsweise mit Polyurethanschaum. Weil der Polyurethanschaum gute Haftungseigenschaften aufweist, nimmt die Schaumschicht 7 neben ihren haptischen Eigenschaften auch die Funktion einer Klebeschicht für die Dekorschicht 8 auf der Kunststoffträgerschicht 5 wahr.
Im Bereich der Gassackabdeckung 2 sollte die Innenraumverkleidung verstärkt werden, um den Kräften stand zu halten, die im Fall der Auslösung des Gassacks auf die Abdeckung wirken, da diese Kräfte wesentlich größer sind als die beim Betrieb des Fahrzeugs auftretenden Kräfte, welche die Grundlage für die Auslegung der Innenraumverkleidung darstellen. Diese Verstärkung 9 erhält den Zusammenhalt der Gassackabdeckung während und nach der Auslösung der Sicherheitseinrichtung und der damit verbundenen explosionsartigen Entfaltung des Gassacks. Zudem weist die Abdeckung als Begrenzung einen oder mehrere Verschwächungsbereiche 4 auf, welche als Sollbruchstelle oder Sollbruchlinie ausgeführt sind. Die Hauptfunktion dieser Verschwächungen ist die Verringerung des Widerstandes der Gassackabdeckung und ihre leichtere Abtrennung vom Bereich 11. Auf die Verschwächungen wird in Fig. 4a und Fig. 4b näher eingegangen. Die Verstärkung 9 verhindert zudem, dass sich die Verschwächungen, welche die Verschwächungsbereiche 4 bilden, nicht als Folge von Stößen auf die Innenraumverkleidung abzuzeichnen beginnen oder es zu einer Beschädigung der Dekorschicht kommt. Die Verstärkung 9 hat zusätzlich die Funktion, bei Auslösung des Gassacks die Krafteinleitung in den Verschwächungsbereich so zu steuern, dass ein definierter und reproduzierbarer Anriss und Rissfortschritt entlang der geometrischen Form der Verschwächung zustande kommt.
Wenn nun, wie in Fig. 1 dargestellt, der als Schusskanal 3 dienende Teil eines Seitenblechs oder einer Innenverkleidung und in seiner Verlängerung das Gassackmodul 6 in einem Winkel zu der inneren Oberfläche 15 angeordnet sind, welcher von 90° abweicht, dienen das Einlegeelement und das reißfeste Material der Verstärkung 9 als Lastverteilungselement, weil die unterschiedlichen Abstände zwischen der äußeren Oberfläche des Gassackmoduls und der inneren Oberfläche 15 der Kunststoffträgerschicht 5 ausgeglichen werden. Der Abstand zwischen der äußeren Oberfläche 17 der Verstärkung 9 und der äußeren Oberfläche des Gassackmoduls bleibt somit zumindest näherungsweise konstant. Mit einem derartigen Lastverteilungselement können gleichzeitig die Abstände zwischen Gassackmodul 6 und innerer Oberfläche 15 der Innenraumverkleidung weitgehend frei variiert werden, weil die Geometrie der Verstärkung beliebig angepasst werden kann. Die Verstärkung 9 besteht in dem in Fig. 1 dargestellten Ausführungsbeispiel aus einem Schaumstoff 10, beispielsweise einem Hartschaum, wie EPP (expandiertes Polypropylen). Damit dieser Schaumstoff 10 auf der Kunststoffträgerschicht haftet, wird er mit einem reißfesten Material 19 zumindest teilweise ummantelt.
Fig. 2 zeigt den Zeitpunkt, zu welchem der Gassack teilweise entfaltet ist. In diesem Schnitt wird deutlich, dass die Verstärkung auch zur Führung des Gassacks dienen kann. Durch diese Führung und den ortsfesten Schusskanal 3 wird eine Drehbewegung der gesamten Gassackabdeckung eingeleitet. Gleichzeitig reißt die Gassackabdeckung an den in diesem Schnitt nicht sichtbaren Verschwächungsbereichen 4 auf.
Im Gegensatz zu Fig. 1 wird eine Verstärkung 9 dargestellt, welche aus einem reißfesten Material 19 als Ummantelung und aus einem Bauteil in Verbundbauweise 14 besteht, welches sandwichartig aufgebaut ist. Das Bauteil in Verbundbauweise 14 besteht beispielsweise aus einer Kernschicht 13, welche eine Wabenstruktur oder Schaumstruktur aufweist und mindestens je einer versteiften Schicht 12, welche beispielsweise durch Einlage von Fasern eine harte, starre Oberfläche erhält.
Der Gassack übt eine Druckkraft auf die Gassackabdeckung aus, sodass sie sich aus dem Einhängmechanismus 20 ausklinken kann.
Die Befestigung des Einlegeteils, welches als Verstärkung 9 der Gassackabdeckung 2 ausgebildet ist, kann auch an einer nicht dargestellten Befestigungsvorrichtung erfolgen. Die Verstärkung 9 klappt bei Auslösung des Gassacks um eine Drehachse 23, welche am Endpunkt einesVerschwächungsbereichs 4 oder in einer Verlängerung desselben angesiedelt sein kann. Um eine weitgehend widerstandsfreie Drehung um diese Drehachse zu gewährleisten, wird eine Ausnehmung 24 in der Kunststoffträgerschicht 5 vorgesehen. Wie in Fig. 1-3 dargestellt ist, kann die Ausnehmung 24 auch dekorativen Zwecken dienen und als Designelement ausgebildet sein.

Fig. 3 zeigt den Zeitpunkt, zu welchem der Gassack vollständig entfaltet ist. Der Winkel zwischen Schusskanal 3 und Gassackabdeckung 2 hat sich weiter vergrößert.

Das dargestellte Öffnungsverhalten des Gassacks ist unabhängig von der Position der Scheibe 26. Der Gassack enthält mindestens eine Naht 21, welche eine teilweise Einschnürung des Gassacks zur Folge hat. Somit stabilisiert sich der Entfaltungsvorgang um diese Naht und eine Führung des Gassacks entlang einer Oberfläche, wie beispielsweise der Scheibe, entfällt. Aus diesem Grund spielt es keine Rolle, ob die Scheibe bei einer aufprallbedingten Auslösung des Gassacks offen oder geschlossen ist

Fig. 4a, die keine erfindungsgemäße Ausführungsform darstellt, zeigt eine Ansicht der Gassackabdeckung und eines Teils der Innenraumverkleidung in perspektivischer Darstellung. In der in Fig. 4a dargestellten Variante ist die Form des Gassackmoduls so gestaltet, dass sie im wesentlichen der Kontur der inneren Oberfläche der Kunststoffträgerschicht 15 folgt. Somit kann in dieser Variante auf eine zusätzliche Verstärkung verzichtet werden. Fig. 4b zeigt eine Ansicht der Gassackabdeckung und eines Teils der Innenraumverkleidung in perspektivischer Darstellung, wobei in diesem Fall die Wirkung einer Verstärkung nach Fig. 1,2,3 gezeigt werden soll. Der sich entfaltende Gassack 18 übt eine Druckkraft auf die Verstärkung und auf den Einhängemechanismus oder das Befestigungselement 20 aus. Diese Druckkraft bewirkt ein Aushängen dieses Einhängemechanismus oder Befestigungselements 20 bei gleichzeitiger Einleitung von Schub- und Biegespannungen in jeden Verschwächungsbereich 4. Durch diese Schub- und Biegespannungen versagt die Gassackabdeckung 2 entlang des oder der Verschwächungsbereiche 4. Die Verschwächungsbereiche können Perforationen sein, welche durch einen Bohrvorgang auf das Kunststoffträgermaterial aufgebracht werden. Alternativ dazu kann es sich auch um Bereiche geringeren Querschnitts handeln, welche im bereits bei der Herstellung der Kunststoffträgerschicht vorgesehen werden. Wenn es sich bei der Kunststoffträgerschicht um ein Teil handelt, welches im Spritzgießverfahren hergestellt wurde, kann im Spritzgießwerkzeug ein Bereich verminderten Querschnitts vorgesehen werden, welcher dann den oder die Verschwächungsbereiche ausbildet. Alternativ dazu kann vorgesehen werden, die Verschwächungsbereiche nachträglich durch ein Verfahren, welches die Energie von Laserstrahlen nutzt, oder durch ein spanabhebendes Verfahren, wie beispielsweise ein Fräsverfahren, herzustellen. Um diesen Anriss zu unterstützen, kann auf der Verstärkung 9 ein Fortsatz oder eine Kante ausgebildet sein, die als Schneidkante dient, wenn auf die Verstärkung 9 die Druckkraft des sich entfaltenden Gassacks einwirkt. Diese Schneidkante dringt erst bei der Druckbeaufschlagung der Verschwächung in das Kunststoffträgermaterial ein. Somit kann auf eine Verschwächung des Randbereichs der Abdeckung gänzlich verzichtet werden, wenn wenig reißfeste Trägermaterialien, wie beispielsweise EPP, zum Einsatz kommen. Eine weitere Funktion der Verstärkung besteht darin, bei Öffnung der Abdeckung Materialablösungen und daraus resultierenden Partikelflug sicher zu vermeiden.

Fig. 5 zeigt einen Schnitt durch eine zweite Ausführungsvariante einer Fahrzeuginnenverkleidung. Anstatt der Kunststoffträgerschicht und der Schaumschicht wird eine einzige Schaumschicht verwendet, die gleichzeitig die Eigenschaften der Kunststoffträgerschicht 5 übernimmt. Als Trägerschicht eignet sich insbesondere ein expandiertes Polypropylen. Gerade im Fall der Verwendung von expandiertem Polypropylen (EPP) entsteht ein relativ grosszelliger Schaum, dessen Haftung mit der Dekorschicht 8, je nach eingesetzter Materialkombination nicht ausreicht, um einen dauerhaften Verbund von EPP Schicht 5 und Dekorschicht 8 zu gewährleisten. Daher kann die EPP-Schicht noch von einer weiteren, feinzelligen Schaumschicht 7 bedeckt sein, die entweder als Haftvermittler oder als Zwischenlage zur Erzeugung einer weichen Oberfläche oder als Kombination derselben dient. Diese, auch als Rückenschaum bezeichnete, Schaumschicht wird gemeinsam mit der Dekorschicht, wie beispielsweise einer Folie, in ein Schäumwerkzeug eingelegt und mit EPP hinterschäumt. Diese Zwischenschicht besteht vorzugsweise ebenfalls aus geschäumtem PP, kann aber auch andere Materialien, wie Polyethylen (PE) enthalten. In einer weiteren Ausführungsform kann diese Schicht auch als textile Schicht ausgeführt sein.

Die notwendige Haftung zwischen der Kunststoffträgerschicht 5 und der Verstärkung 9 wird durch die Verschweißung, Verklebung oder Einschäumung mit der Kunststoffträgerschicht erreicht. Eine derartige Verstärkung 9 besteht, wie in Fig. 5 gezeigt wird, beispielsweise aus einem Einlageteil aus EPP oder expandiertem EPP welches mit einem faserverstärkten Kunststoff 12, einem Kunststoffformteil 13 mit einem eingeschäumten oder eingebetteten Gewebe oder einer Matte oder einem Metallgitter zumindest teilweise ummantelt wird. Bei einer Schichtdicke von 10 mm kann die Einbettung einen Querschnitt von bis zu 4 mm umfassen. Diese Einbettung kann einerseits durch ein zumindest partielles Umschäumen der Verstärkung 9 und andererseits durch Verschweißen der Verstärkung mit dem EPP Träger erfolgen. Handelt es sich bei dem Kunststoffträger, um ein anderes Material als EPP, kann die Einbettung zur Herstellung des Verbundes nicht zum Ziel führen, wie beispielsweise bei Einsatz eines Spritzgussträgers. In dieser Variante wird die Verstärkung 9 mit dem Kunststoffträger verschweißt, wenn der Kunststoffträger aus PP besteht. Durch die Verschweißung bildet die faserverstärkte PP Schicht mit einem Bereich des Kunststoffträgers einen so starken Verbund, dass Verstärkung 9 und die Kunststoffträgerschicht als Klappe wirken, deren Form im wesentlichen auch nach einem Schussversuch erhalten bleibt.

Fig. 6 ist ein Schnitt durch eine Gassackabdeckung in einer zweiten Ausführungsform bei teilweise ausgelöstem Gassack. In dieser Variante ist die Verstärkung als ein von der Kunststoffträgerschicht separates Bauteil ausgeführt. Wie in Fig. 5 besteht die Kunststoffträgerschicht aus EPP, hier soll gezeigt werden, dass beispielsweise eine derartige Verstärkung noch nachträglich angebracht werden kann, wenn beispielsweise ein anderes Gassackmodul verwendet werden soll.

Fig. 7 ist ein Schnitt durch eine Gassackabdeckung in einer zweiten Ausführungsform bei ausgelöstem Gassack. Da die Ausführungsform der in Fig. 3 beschriebenen Ausführungsform entspricht und die Funktionsweise sich durch die Änderung des Materials der Kunststoffträgerschicht nicht wesentlich ändert, weil das Einlegeteil 10 im gleichen Verfahrensschritt wie der Rest der Kunststoffträgerschicht erzeugt wird, soll auf diese Figur nicht mehr im Detail eingegangen werden. Anzumerken ist noch, dass durch die geringe Reißfestigkeit des EPP in jedem Fall eine Verstärkung 9 vorgesehen werden muß. Diese Verstärkung 9 ist wie in den vorhergehenden Beispielen als netzartige, gitterartige oder faserartige Matte oder Vlies ausgeführt, welches mit dem EPP durch Verschweißen, Verkleben oder Einschäumen fest verbunden wird.

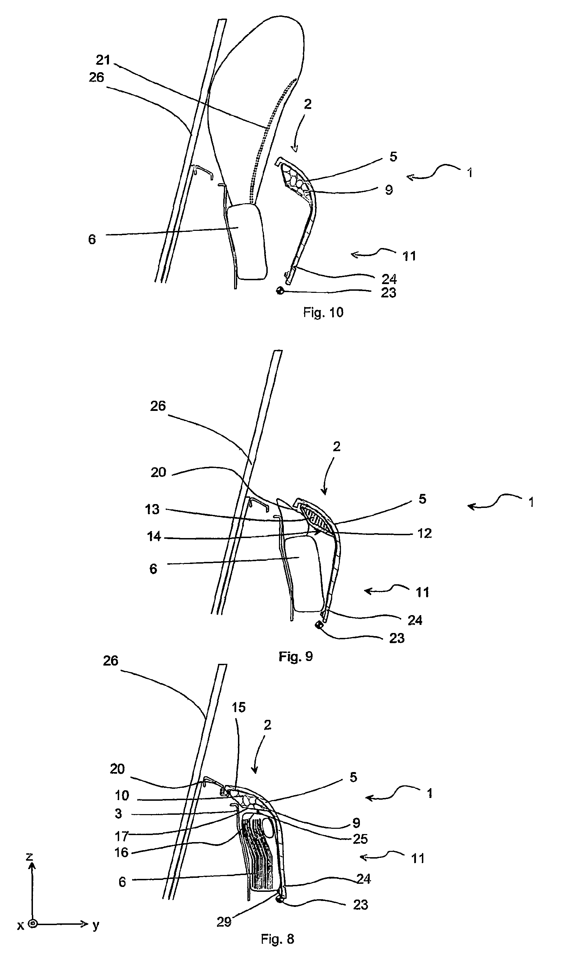

Fig. 8 ist ein Schnitt durch eine Gassackabdeckung in einer dritten Ausführungsform. In dieser Variante besteht die Fahrzeuginnenraumverkleidung aus einer einzigen Schicht, nämlich der Kunststoffträgerschicht 5. Diese Trägerschicht ist vorteilhafterweise als Spritzgießteil ausgeführt. Anstatt der Spritzgussträgerschicht kann auch eine Trägerschicht aus naturfaserverstärktem PP oder Holzfaserformstoff verwendet werden.
Um zu vermeiden, dass bei jeder Änderung der Oberflächengeometrie der Innenraumverkleidung eine Neuauslegung des Werkzeugs zur Herstellung der Kunststoffträgerschicht notwendig wird, wird eine Verstärkung 9 für eine Gassackabdeckung 2 vorgesehen. Die Gassackabdeckung 2 ist als Teil eines Kunststoffbauteils 1 ausgebildet, wobei besagtes Kunststoffbauteil 1 vorzugsweise als Innenraumverkleidung in einem Fahrzeug Anwendung findet. Die Gassackabdeckung 2 ist durch mindestens einen Verschwächungsbereich 4 (im Schnitt nicht sichtbar, aber ähnlich Fig. 4a oder Fig. 4b) von der Innenraumverkleidung zumindest teilweise abgetrennt, und die Verstärkung 9 erstreckt sich zumindest über einen großen Bereich der Gassackabdeckung 2 wobei der Abstand 25 zwischen der äußeren Oberfläche 17 der Verstärkung 9 und der äußeren Oberfläche 16 des Gassackmoduls 6 im wesentlichen konstant ist. Durch den konstanten Abstand zwischen Gassackmodul 6 und Verstärkung 9 ist gewährleistet, dass bei Auslösung des Gassacks alle Bereiche der Gassackabdeckung zu gleicher Zeit mit dem sich entfaltenden Gassack in Berührung kommen und die eingeleitete Kraft, die durch den Druck, der auf den Gassack wirkt, zustande kommt, sich annähernd gleichförmig über die innere Oberfläche 15 der Kunststoffträgerschicht im Bereich der Gassackabdeckung verteilt. Diese gleichmäßige Verteilung der Kraft ist somit gerade dann gewährleistet, wenn der Abstand zwischen der inneren Oberfläche der Kunststoffträgerschicht 15 im Bereich der Gassackabdeckung und der äußeren Oberfläche 16 des Gassackmoduls 6 variabel ist.

Durch das Teil als Verstärkung dienende Einlegeteil 10 werden unterschiedliche Abstände 27 der äußeren Oberfläche der Verstärkung 17 zu der inneren Oberfläche der Kunststoffträgerschicht 15 entlang einer ersten Schnittebene und entlang einer zweiten Schnittebene, welche beispielsweise im wesentlichen normal zur ersten Schnittebene angeordnet ist, ausgeglichen, weil sich die Oberfläche der Innenraumverkleidung in bezug auf die Oberfläche des Gassackmoduls nicht nur in der x-z Ebene eines orthogonalen Koordinatensystems - mit der x-Richtung als gedachter Fahrtrichtung des Fahrzeugs - ändern kann, sondern sich der Abstand 25 der äußeren Oberfläche der Gassackabdeckung 16 von der äußeren Oberfläche der Verstärkung 17 entlang einer zweiten Schnittebene, die im wesentlichen normal zu der ersten Schnittebene angeordnet ist und durch einen beliebigen Punkt des Einlegeteils verläuft, verändern kann. Diese zweite Schnittebene enthält die y-Koordinate, die normal zur Fahrtrichtung verläuft. Derselbe Abstand 25 kann sich auch gleichzeitig in der x-z Schnittebene verändern. Somit kann die Dicke des Einlegeteils in jedem beliebigen Punkt der Oberfläche 15 unterschiedlich sein.

Bei Entfaltung des Gassacks öffnet sich die Gassackabdeckung entlang einer Entfaltungsrichtung 28. Die Gassackabdeckung 2 bleibt während des ganzen Öffnungsvorgangs mit der Verstärkung 9 und dem von einem reißfesten Material 19 zumindest teilweise eingeschlossenen Einlegeteil 10 verbunden. Der Drehpunkt 23 kann im Bereich einer Ausnehmung liegen, welche aus dekorativen oder herstellungstechnischen Gründen vorgesehen ist (beispielsweise Übergang zur Armauflage). Die Gassackabdeckung wird dabei über das an der äußeren Oberfläche 17 des Einlegeteils 10 angebrachte reißfeste Material 19 daran gehindert, sich von der Oberfläche der Innenraumverkleidung abzulösen. Das reißfeste Material 19 kann gleichzeitig die Wirkung eines Scharniers übernehmen, daher ist es zumindest an einem Ende mit der Kunststoffträgerschicht 5 verbunden. In einer vorteilhaften Ausgestaltung ist das reißfeste Material 19 um ein Befestigungselement 29 gewickelt, welches mit der Kunststoffträgerschicht 5 verbunden ist, wobei die Verbindung durch Vernieten, Verschrauben oder unter Einwirkung von Wärme oder unter Einsatz von Klebe- oder Bindemitteln erfolgt. Für nicht schweißbare Materialien besteht auch die Möglichkeit der Verklebung. Insbesondere, wenn es durch die mit der Verschweißung bedingte Erwärmung zu einem Verzug des Kunststoffträgers kommt oder der Kunststoffträger eine zu geringe Dicke aufweist, um ein Schweißverfahren durchzuführen, kann es vorteilhaft sein, die Verstärkung auf den Kunststoffträger zu kleben.

Fig. 9 ist ein Schnitt durch eine Gassackabdeckung in einer dritten Ausführungsform bei teilweise ausgelöstem Gassack.

Fig. 10 ist ein Schnitt durch eine Gassackabdeckung in einer dritten Ausführungsform bei ausgelöstem Gassack Die Entfaltung des Gassacks erfolgt ähnlich wie in den vorherigen Ausführungsbeispielen und für die Details wird auf die Fig. 4a, Fig. 4b verwiesen. Das Einlegeteil 10 kann im Bereich der Verschwächungen 4 in diese eingreifen. Somit entfalten die Endbereiche des Einlegeteils eine Keilwirkung wodurch die Scherspannungen in den Verschwächungspunkten oder Sollbruchlinien schlagartig überwunden werden und ein exakter Anriss und Rissfortschritt erfolgt. Somit hat das Einlegeteil 10 neben der Funktion als Lastverteilungselement auch eine Scharnierfunktion entlang aller seitlichen Verschwächungsbereiche 4. Um sicherzustellen, dass die Gassackabdeckung und das Einlegeteil als Einheit öffnen, wird das Einlegeteil 9 mit einer Schicht aus reißfestem Material 19 versehen, wie schon im ersten Ausführungsbeispiel beschrieben wurde. Dabei kann es sich um dieselbe Verstärkungsschicht 9 handeln oder auch um eine oder mehrere unabhängig davon angebrachte Schichten.

Unterschiedlich zu dem ersten Ausführungsbeispiel ist lediglich die Art der Befestigung des reißfesten Materials auf der Kunststoffträgerschicht. Das reißfeste Material 19 wird durch eine Öffnung 35 der Kunststoffträgerschicht geführt. In einem annähernd ebenen Bereich 37 der Kunststoffträgerschicht wird das reißfeste Material mit der Kunststoffträgerschicht verschweißt. Diese vereinfachte Verfahrensvariante ist möglich, weil es sich bei den Seitenbereichen um unsichtbare Teile handelt, an welche keine besonderen Anforderungen in bezug auf Oberflächengüte gestellt werden.

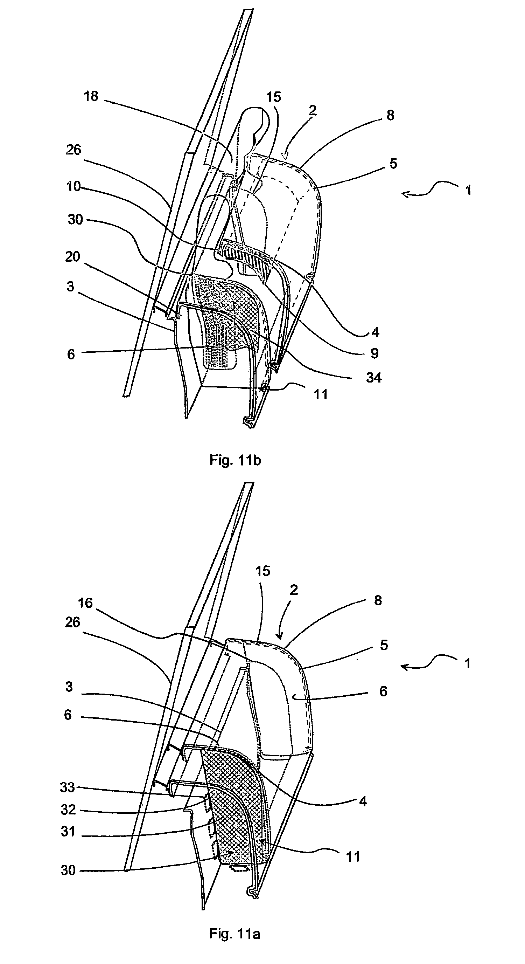

Fig. 11a ist eine perspektivische Ansicht der in den Fig. 8-10 dargestellten Ausführungsformen. Insbesondere werden Seitenbereiche 30 verwendet, welche zur Führung des Luftsacks und zur Trennung von anderen Bereichen der Innenverkleidung verwendet werden.

Um ein Ablösen der Seitenbereiche 30, welche in der Schnittdarstellung nach Fig. 9 nicht sichtbar sind, bei Auslösung des Gassacks zu verhindern, kann auf den dem Gassackmodul zugewendeten Oberflächen ein zusätzliches Gewebe, Gewirke oder Gelege 31 aufgepresst, aufgeschweißt oder aufgeklebt werden. Dieses Gewebe besteht aus kunststoffummantelten Fasern, welche im Fall der Verschweißung zumindest teilweise mit den Seitenbereichen 30 verschmelzen. In einer bevorzugten Ausführungsvariante kann dieses Gewebe aus Kevlar bestehen, weil sich Kevlar auch unter Belastung mit dem Gassackauslösedruck kaum dehnt. In einer weiteren Ausführungsform kann auch ein Gitter zum Einsatz kommen, beispielsweise aus faserverstärktem Material oder aus Metalldrähten aufgebaut ist.

Alternativ kann das Gewebe auch schon während des Herstellungsprozesses der Seitenbereiche 30 mit eingepresst werden. Das Gewebe kann mit dem Schusskanal 3 oder mit einem seitlichen Führungsbereich für den Gassack fest verbunden sein. Somit wirkt das Gewebe als Versteifungselement für die Seitenbereiche.

In Fig. 11b ist unter anderem ein Einlageelement 9 dargestellt, welches genau der Form des Gassacks im Negativ entspricht.

Die Oberfläche des Einlegeelements 9 kann auch eine Krümmung aufweisen, welche an die Krümmung der Oberfläche 16 des Gassackmoduls 6 angepasst ist. Durch diese präzise Ausgestaltung, bei welcher der Abstand 25 in jedem Punkt nicht nur annähernd, sondern genau konstant gehalten wird, kann das Auslöseverhalten weiter optimiert werden. Insbesondere, wenn als Dekorschicht eine Haut oder Folie vorgesehen ist, kann durch das zeitgleiche Aufreißen an den Verschwächungsbereichen 4 großflächigen Ablösungen der Dekorschicht entgegengewirkt werden.

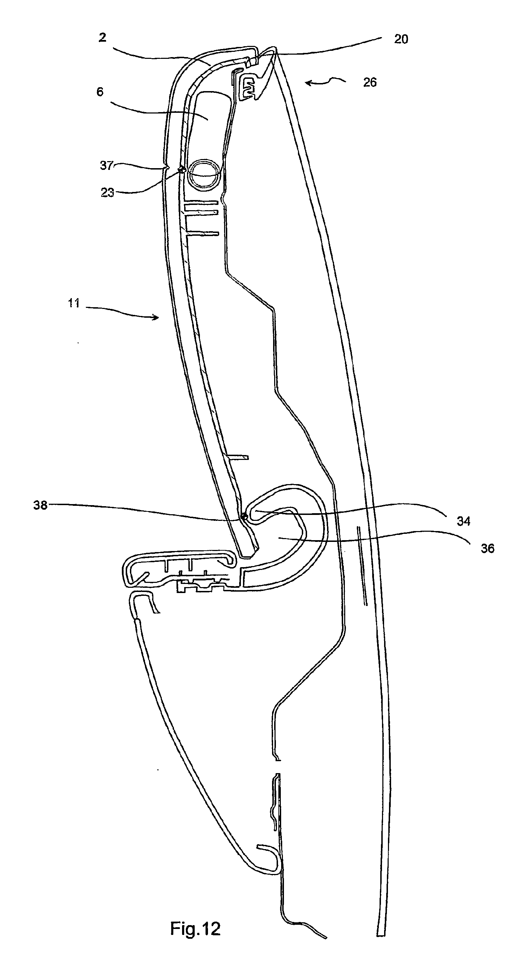

Fig. 12 ist ein Schnitt durch eine Gassackabdeckung in einer vierten Ausführungsform. Diese Gassackabdeckung ist für eine Seitentür eines Fahrzeugs bestimmt. Das Gassackmodul 6 ist im obersten Bereich dieser Seitentür angebracht. Es wird von einer Gassackabdeckung 2 geschützt, welche als Teil der Innenraumverkleidung ausgebildet ist. In diesem Fall sind nur die Seitenbereiche 30 mit der Innenraumverkleidung verbunden und weisen dementsprechend Verschwächungsbereiche auf. Ein Teil der Drehbewegung der Gassackabdeckung wird daher von dem darunterliegenden Teil der Innenraumverkleidung 11 mitgemacht. Die Gassackabdeckung weist eine Designnut 37 auf, welche als primäre Drehachse 23 dient. Eine sekundäre Drehachse 38 kann um den unteren Endbereich der Innenraumverkleidung angeordnet sein. Ein Scharniermechanismus für ein Ablagefach wird dabei als Anlenkbereich für diese sekundäre Drehachse verwendet.

### Bezugszeichenliste:

- 1.: Innenraumverkleidung, Kunststoffbauteil (z.B. Türseitenverkleidung)
- 2.: Gassackabdeckung
- 3.: Schusskanal
- 4.: Verschwächungsbereich
- 5.: Kunststoffträgerschicht
- 6.: Gassackmodul
- 7.: Schaumschicht
- 8.: Dekorschicht (Haut)
- 9.: Verstärkungsschicht der Gassackabdeckung (Einlegeteil und Gewebe)
- 10.: Einlegeteil aus Schaumstoff oder EPP
- 11.: Innenraumverkleidung ohne Sicherheitseinrichtung
- 12.: Faserverstärkter Kunststoff
- 13.: Wabenstruktur
- 14.: Einlegeteil mit Sandwichstruktur
- 15.: Innere Oberfläche der Kunststoffträgerschicht
- 16.: Äußere Oberfläche des Gassackmoduls
- 17.: Äußere Oberfläche der Verstärkung
- 18.: Gassack (Airbag)
- 19.: Reißfestes Material
- 20.: Einhängmechanismus oder Befestigungselement
- 21.: Naht
- 22.: Befestigungsvorrichtung
- 23.: Drehachse
- 24.: Ausnehmung
- 25.: Abstand
- 26.: Scheibe
- 27.: Abstand
- 28.: Entfaltungsrichtung
- 29.: Befestigungselement
- 30.: Seitenbereich
- 31.: Verstärkungsschicht in einem Seitenbereich
- 32.: Öffnung
- 33.: Befestigung des reißfesten Materials
- 34.: Ebener Bereich der Kunststoffträgerschicht
- 35.: Scharniermechanismus
- 36.: Anlenkbereich
- 37.: Designnut
- 38.: sekundäre Drehachse

## Patentansprüche

1. Sicherheitseinrichtung für ein Fahrzeug, insbesondere für den Schutz eines Insassen vor Seitenaufprall, mit mindestens einer Gassackeinrichtung (6), die unsichtbar hinter einer Innenraumverkleidung (1) angeordnet ist, wobei mindestens ein Bereich der Innenraumverkleidung (1) als Gassackabdeckung (2) ausgeführt ist und diese Gassackabdeckung (2) von mindestens einem Verschwächungsbereich (4) begrenzt wird und mit einem Einhängemechanismus (20) zusammenwirkt,
**dadurch gekennzeichnet, dass** im Bereich der Gassackabdeckung (2) eine Verstärkung (9, 10, 19, 31) vorgesehen ist, die sich unmittelbar an den Einhängemechanismus anschließt und geeignet ist, den Gassack (18) zu führen.

2. Sicherheitseinrichtung nach Anspruch 1,
**dadurch gekennzeichnet, dass** sich die Verstärkung (9, 10, 19, 31) zwischen den Verschwächungsbereichen (4) erstreckt.

3. Sicherheitseinrichtung nach Anspruch 2,
**dadurch gekennzeichnet, dass** die Verschwächungsbereiche (4) an den seitlichen Begrenzungen der Gassackabdeckung (2) angeordnet sind.

4. Sicherheitseinrichtung nach Anspruch 2,
**dadurch gekennzeichnet, dass** die Verschwächungsbereiche (4) als Reißnähte ausgeführt sind.

5. Sicherheitseinrichtung nach Anspruch 2,
**dadurch gekennzeichnet, dass** die Verschwächungsnähte (4) keilförmige Gestalt aufweisen.

6. Sicherheitseinrichtung nach Anspruch 2,
**dadurch gekennzeichnet, dass** die Verschwächungsbereiche (4) als Blindbohrungen ausgeführt sind.

7. Sicherheitseinrichtung nach Anspruch 2,
**dadurch gekennzeichnet, dass** durch die Verschwächungsbereiche (4) eine teilweise Durchtrennung von Gassackabdeckung (2) und Innenraumverkleidung (1) erfolgt.

8. Sicherheitseinrichtung nach einem der Ansprüche 1 bis 7,
**dadurch gekennzeichnet, dass** die Gassackabdeckung (2) mindestens eine Kunststoffträgerschicht (5) enthält.

9. Sicherheitseinrichtung nach Anspruch 8,
**dadurch gekennzeichnet, dass** die Kunststoffträgerschicht (5) aus Polypropylen besteht.

10. Sicherheitseinrichtung nach Anspruch 9,
**dadurch gekennzeichnet, dass** die Gassackabdeckung (2) neben der Kunststoffträgerschicht (5) eine Dekorschicht (8) enthält.

11. Sicherheitseinrichtung nach Anspruch 10,
**dadurch gekennzeichnet, dass** zwischen Kunststoffträgerschicht (5) und Dekorschicht (8) mindestens eine Schaumschicht (7) angeordnet ist.

12. Sicherheitseinrichtung nach Anspruch 9,
**dadurch gekennzeichnet, dass** die Kunststoffträgerschicht (5) aus einer Schaumschicht besteht.

13. Sicherheitseinrichtung nach Anspruch 12,
**dadurch gekennzeichnet, dass** die Kunststoffträgerschicht (5) aus expandiertem Polypropylen besteht.

14. Sicherheitseinrichtung nach Anspruch 8,
**dadurch gekennzeichnet, dass** die Verstärkung (9, 10, 19, 31) einstückig mit der Kunststoffträgerschicht (5) verbunden ist.

15. Sicherheitseinrichtung nach einem der Ansprüche 1 bis 14,
**dadurch gekennzeichnet, dass** die Verstärkung (9, 10, 19, 31) zumindest aus einem Einlegeteil (10) besteht.

16. Sicherheitseinrichtung nach Anspruch 15
**dadurch gekennzeichnet, dass** das Einlegeteil (10) ein Verbundteil ist.

17. Sicherheitseinrichtung nach Anspruch 16,
**dadurch gekennzeichnet, dass** das Einlegeteil (10) einen sandwichartigen Aufbau hat.

18. Sicherheitseinrichtung nach Anspruch 17,
**dadurch gekennzeichnet, dass** das Einlegeteil (10) mindestens eine wabenförmige Schicht (13) und eine faserverstärkte Kunststoffschicht (12) enthält.

19. Sicherheitseinrichtung nach einem der Ansprüche 1 bis 14,
**dadurch gekennzeichnet, dass** die Kunststoffträgerschicht (5) und die Verstärkung (9, 10, 19, 31) zumindest teilweise mit einem reißfesten Material (19) verbunden ist.

20. Sicherheitseinrichtung nach Anspruch 19,
**dadurch gekennzeichnet, dass** das reißfeste Material (19) als Gewebe, Metalleinleger, Gewirke, Gitter, Geflecht oder Gelege besteht.

21. Sicherheitseinrichtung nach Anspruch 19,
**dadurch gekennzeichnet, dass** das reißfeste Material (19) metallische Bestandteile enthält.

22. Sicherheitseinrichtung nach einem der Ansprüche 1 bis 21,
**dadurch gekennzeichnet, dass** der sich entfaltende Airbag (18) auf die äußere Oberfläche (17) der Verstärkung (9, 10, 19, 31) zu liegen kommt.

23. Sicherheitseinrichtung nach einem der Ansprüche 1 bis 22,
**dadurch gekennzeichnet, dass** der sich entfaltende Airbag (18) die Schichten der Gassackabdeckung (2) in die Richtung, die den Fahrzeuginsassen zugewandt ist, verformt.

24. Sicherheitseinrichtung nach einem der Ansprüche 1 bis 23,
**dadurch gekennzeichnet, dass** der Airbag (18) an der Seite, welche der Verstärkung (9, 10, 19, 31) zugewendet ist, mindestens eine Naht (21) aufweist.

25. Sicherheitseinrichtung nach Anspruch 24,
**dadurch gekennzeichnet, dass** die Naht (21) eine asymmetrische Entfaltung des Airbags (18) einleitet.

26. Sicherheitseinrichtung nach Anspruch 25,
**dadurch gekennzeichnet, dass** sich der Airbag (18) durch die Naht (21) in Richtung des Fahrzeuginnenraums ausrichtet.

27. Sicherheitseinrichtung nach Anspruch 23,
**dadurch gekennzeichnet, dass** sich die Gassackabdeckung (2) durch die Verformung im Bereich des Einhängemechanismus (20) öffnet.

28. Sicherheitseinrichtung nach Anspruch 27,
**dadurch gekennzeichnet, dass** nach Öffnung des Einhängmechanismus (20) die Drehung der Gassackabdeckung (2) um die Drehachse (23) erfolgt.

29. Sicherheitseinrichtung nach Anspruch 28,
**dadurch gekennzeichnet, dass** eine Designnut (37) als Drehachse (23) verwendet wird.

30. Sicherheitseinrichtung nach Anspruch 28,
**dadurch gekennzeichnet, dass** ein Scharniermechanismus (35) für ein Ablagefach als Anlenkbereich (36) für die Drehachse (38) verwendet wird.

31. Seitentür eines Fahrzeugs mit einer Sicherheitseinrichtung nach einem der vorhergehenden Ansprüche.

## Claims

1. Safety device for a vehicle, in particular for protecting an occupant against lateral impact, said safety device comprising at least one airbag device (6) which is invisibly arranged behind an interior lining (1), wherein at least one region of the interior lining (1) is designed as an airbag cover (2) and this airbag cover (2) is delimited by at least one weakened region (4) and cooperates with a suspension mechanism (20), **characterised in that** a reinforcement (9, 10, 19, 31) is provided in the region of the airbag cover (2), which reinforcement is connected directly to the suspension mechanism and is suitable for guiding the airbag (18).

2. Safety device according to claim 1, **characterised in that** the reinforcement (9, 10, 19, 31) extends between the weakened regions (4).

3. Safety device according to claim 2, **characterised in that** the weakened regions (4) are arranged at the lateral limits of the airbag cover (2)

4. Safety device according to claim 2, **characterised in that** the weakened regions (4) are designed as tear-open seams.

5. Safety device according to claim 2, **characterised in that** the weakened regions (4) have a wedge shape.

6. Safety device according to claim 2, **characterised in that** the weakened regions (4) are designed as blind holes.

7. Safety device according to claim 2, **characterised in that** the airbag cover (2) and the interior lining (1) are partially cut through by the weakened regions (4).

8. Safety device according to one of claims 1 to 7, **characterised in that** the airbag cover (2) contains at least one plastic support layer (5).

9. Safety device according to claim 8, **characterised in that** the plastic support layer (5) consists of polypropylene.

10. Safety device according to claim 9, **characterised in that** the airbag cover (2) contains a decorative layer (8) in addition to the plastic support layer (5).

11. Safety device according to claim 10, **characterised in that** at least one foam layer (7) is arranged between the plastic support layer (5) and the decorative layer (8).

12. Safety device according to claim 9, **characterised in that** the plastic support layer (5) consists of a foam layer.

13. Safety device according to claim 12, **characterised in that** the plastic support layer (5) consists of expanded polypropylene.

14. Safety device according to claim 8, **characterised in that** the reinforcement (9, 10, 19, 31) is connected in one piece with the plastic support layer (5).

15. Safety device according to one of claims 1 to 14, **characterised in that** the reinforcement (9, 10, 19, 31) consists at least of an insert (10).

16. Safety device according to claim 15, **characterised in that** the insert (10) is a composite part.

17. Safety device according to claim 16, **characterised in that** the insert (10) has a sandwich-type structure.

18. Safety device according to claim 17, **characterised in that** the insert (10) contains at least one honeycomb-type layer (13) and a fibre-reinforced plastic layer (12).

19. Safety device according to one of claims 1 to 14, **characterised in that** the plastic support layer (5) and the reinforcement (9, 10, 19, 31) are at least partially connected to a tear-resistant material (19).

20. Safety device according to claim 19, **characterised in that** the tear-resistant material (19) exists as a woven fabric, a metal insert, a knitted fabric, a mesh, a netting or a scrim.

21. Safety device according to claim 19, **characterised in that** the tear-resistant material (19) contains metallic constituents.

22. Safety device according to one of claims 1 to 21, **characterised in that** the unfolding airbag (18) comes to lie on the outer surface (17) of the reinforcement (9, 10, 19, 31).

23. Safety device according to one of claims 1 to 22, **characterised in that** the unfolding airbag (18) deforms the layers of the airbag cover (2) in the direction towards the vehicle occupants.

24. Safety device according to one of claims 1 to 23, **characterised in that** the airbag (18) has at least one seam (21) on the side which faces towards the reinforcement (9, 10, 19, 31).

25. Safety device according to claim 24, **characterised in that** the seam (21) brings about asymmetric unfolding of the airbag (18).

26. Safety device according to claim 25, **characterised in that** the airbag (18) is oriented in the direction of the vehicle interior by the seam (21).

27. Safety device according to claim 23, **characterised in that** the airbag cover (2) opens as a result of the deformation in the region of the suspension mechanism (20).

28. Safety device according to claim 27, **characterised in that**, after the suspension mechanism (20) has opened, the airbag cover (2) is rotated about the pivot pin (23).

29. Safety device according to claim 28, **characterised in that** a design groove (37) is used as the pivot pin (23).

30. Safety device according to claim 28, **characterised in that** a hinge mechanism (35) for a compartment is used as the articulation region (36) for the pivot pin (38).

31. Side door of a vehicle, comprising a safety device according to one of the preceding claims.

## Revendications

1. Dispositif de sécurité dans un véhicule automobile, notamment pour mettre un passager à l'abri d'un choc latéral, avec au moins un dispositif à coussin gonflable (6) monté invisible derrière un habillage interne (1) dont au moins une partie constitue une couverture de coussin d'air (2), délimitée par au moins une zone d'affaiblissement (4) et coopérant avec un mécanisme d'accrochage (20),
**caractérisé en ce que**
(2) un renforcement (9, 10, 19, 31) se raccorde directement au mécanisme d'accrochage et convient à assurer le guidage du coussin d'air (18) dans la zone de la couverture.

2. Dispositif de sécurité selon la revendication 1,
**caractérisé en ce que**
le renforcement (9, 10, 19, 31) s'étend entre les zones d'affaiblissement (4).

3. Dispositif de sécurité selon la revendication 2,
**caractérisé en ce que**
les zones d'affaiblissement (4) sont disposées le long des limites latérales de la couverture (2).

4. Dispositif de sécurité selon la revendication 2,
**caractérisé en ce que**
les zones d'affaiblissement (4) ont la forme de joints de déchirure.

5. Dispositif de sécurité selon la revendication 2,
**caractérisé en ce que**
les joints de déchirure (4) ont une configuration en forme de coins.

6. Dispositif de sécurité selon la revendication 2,
**caractérisé en ce que**
les zones d'affaiblissement (4) sont constituées par des trous borgnes.

7. Dispositif de sécurité selon la revendication 2,
**caractérisé en ce qu'**
dans les zones d'affaiblissement (4) a lieu une séparation partielle de la couverture (2) et de l'habillage interne (1).

8. Dispositif de sécurité selon une des revendications 1 à 7,
**caractérisé en ce que**
la couverture (2) comprend au moins une couche porteuse en matière plastique (5).

9. Dispositif de sécurité selon la revendication 8,
**caractérisé en ce que**
la couche porteuse (5) est en polypropylène.

10. Dispositif de sécurité selon la revendication 9,
**caractérisé en ce que**
la couverture (2) comprend à côté de la couche porteuse en matière plastique (5) une couche décorative (8).

11. Dispositif de sécurité selon la revendication 10,
**caractérisé en ce qu'**
entre la couche porteuse en matière plastique (5) et la couche décorative (8) se trouve au moins une couche de mousse (7).

12. Dispositif de sécurité selon la revendication 9,
**caractérisé en ce que**
la couche porteuse en matière plastique (5) est en mousse.

13. Dispositif de sécurité selon la revendication 9,
**caractérisé en ce que**
la couche porteuse en matière plastique (5) est en polypropylène expansé.

14. Dispositif de sécurité selon la revendication 8,
**caractérisé en ce que**
le renforcement (9, 10, 19, 31) est d'une seule pièce avec la couche porteuse en matière plastique (5).

15. Dispositif de sécurité selon une des revendications 1 à 14,
**caractérisé en ce que**
le renforcement (9, 10, 19, 31) est composé au moins d'une pièce d'insertion (10).

16. Dispositif de sécurité selon la revendication 15,
**caractérisé en ce que**
la pièce d'insertion (10) est une pièce composite.

17. Dispositif de sécurité selon la revendication 16,
**caractérisé en ce que**
la pièce d'insertion (10) a une constitution du genre sandwich.

18. Dispositif de sécurité selon la revendication 17,
**caractérisé en ce que**
la pièce d'insertion (10) présente au moins une couche en nid d'abeilles (13) et une couche en matière plastique (12) renforcée par des fibres.

19. Dispositif de sécurité selon une des revendications 1 à 14,
**caractérisé en ce que**
la couche porteuse en matière plastique (5) et le renforcement (9, 10, 19, 31) sont reliés au moins partiellement par un matériau (19) résistant à la déchirure.

20. Dispositif de sécurité selon la revendication 19,
**caractérisé en ce que**
le matériau (19) résistant à la déchirure est un tissu, un insert métallique, un tricot, une grille, un treillis.

21. Dispositif de sécurité selon la revendication 19,
**caractérisé en ce que**
le matériau (19) résistant à la déchirure contient des composants métalliques.

22. Dispositif de sécurité selon une des revendications 1 à 21,
**caractérisé en ce que**
quand il se déploie, le coussin d'air (18) vient s'appliquer sur la surface externe (17) du renforcement (9, 10, 19, 3 1).

23. Dispositif de sécurité selon une des revendications 1 à 22,
**caractérisé en ce que**
quand il se déploie, le coussin d'air (18) déforme les couches de la couverture d'airbag (2) dans la direction allant vers les occupants du véhicule.

24. Dispositif de sécurité selon une des revendications 1 à 23,
**caractérisé en ce que**
sur le côté en regard du renforcement (9, 10, 19, 31), le coussin d'air (18) présente au moins un joint (21).

25. Dispositif de sécurité selon la revendication 24,
**caractérisé en ce que**
le joint (21) induit un déploiement asymétrique du coussin d'air (18).

26. Dispositif de sécurité selon la revendication 25,
**caractérisé en ce que**
le coussin d'air (18) est dirigé par le joint (21) vers l'habitacle du véhicule.

27. Dispositif de sécurité selon la revendication 23,
**caractérisé en ce que**
la couverture (2) s'ouvre par déformation dans la zone du mécanisme d'accrochage (20).

28. Dispositif de sécurité selon la revendication 27,
**caractérisé en ce qu'**
après l'ouverture du mécanisme d'accrochage (20), la couverture (2) tourne autour d'un axe de rotation (23).

29. Dispositif de sécurité selon la revendication 28,
**caractérisé en ce qu'**
une rainure décorative (37) est utilisée comme axe de rotation (23).

30. Dispositif de sécurité selon la revendication 28,
**caractérisé en ce qu'**
un mécanisme à charnière (35) pour une tablette de rangement, est utilisé comme zone d'articulation (36) pour l'axe de rotation (38).

31. Porte latérale d'un véhicule automobile, équipée d'un dispositif de sécurité selon l'une des revendications précédentes.
